# FASCICULE DE BREVET EUROPEEN

(11) **EP 2 163 743 B1**
(45) Date de publication et mention de la délivrance du brevet: **07.11.2012**
(21) Numéro de dépôt: 09290647.8
(22) Date de dépôt: 26.08.2009
(51) Int. Cl.: F01N 3/20

(54) **Procédé de traitement des polluants contenus dans des gaz d'échappement d'un moteur à combustion interne**
Verfahren zur Behandlung von Schadstoffe, die in den Abgasen eines Verbrennungsmotors enthalten sind
Process for treating pollutants contained in the exhaust gases of an internal combustion engine

(30) Priorité: 15.09.2008 FR 0805035
(43) Date de publication de la demande: 17.03.2010
(73) Titulaire: IFP Energies nouvelles, 92852 Rueil-Malmaison Cedex (FR)
(72) Inventeur: Colliou, Thierry, 38138 Les Cotes d'Arey (FR)

(56) Documents cités:
- EP-A- 1 602 403
- DE-A1- 19 529 835
- DE-A1-102005 015 479

## Description

La présente invention se rapporte à une installation de traitement des polluants contenus dans des gaz d'échappement d'un moteur à combustion interne.

Elle est dirigée notamment mais non exclusivement vers un moteur à allumage commandé, en particulier de type à Essence ou à Gaz.

Cette invention concerne également un procédé permettant d'utiliser cette installation de traitement des polluants.

Les polluants contenus dans les gaz d'échappement d'un moteur qui résultent de la combustion d'un mélange carburé sont principalement les hydrocarbures imbrûlés (HC), le monoxyde de carbone (CO) et les oxydes d'azote (NO et N02), plus communément baptisés NOx.

Afin de respecter les normes environnementales et de répondre à la sévèrisation de ces normes, telles que les normes dites EURO V ou EURO VI, il est nécessaire de traiter ces polluants avant de rejeter les gaz d'échappement dans l'atmosphère.

Comme cela est généralement connu, des dispositifs de post-traitement de ces polluants sont mis en place sur la ligne d'échappement des véhicules. Ainsi, le traitement des HC et du CO s'effectue par passage de ces gaz d'échappement au travers d'un catalyseur d'oxydation à triple effet, dit catalyseur trois voies, grâce auquel les HC et le CO sont oxydés. De plus, les NOx sont réduits dans des conditions particulières de fonctionnement du moteur, tel que le fonctionnement avec un mélange carburé stoechiométrique, par passage au travers de ce catalyseur.

Pour pouvoir traiter les NOx, dans le cas où les gaz sont globalement oxydants, ces gaz traversent également un autre catalyseur, dit catalyseur RCS (pour Réduction Catalytique Sélective), qui permet de réduire sélectivement les NOx en azote grâce à l'action d'un agent réducteur. Cet agent peut être de l'ammoniac ou un composé générant de l'ammoniac par décomposition, comme de l'urée, qui est généralement injecté en amont du catalyseur RCS. Cet ammoniac se mélange aux gaz d'échappement, puis réagit avec les NOx des gaz d'échappement sur le catalyseur SCR selon plusieurs réactions chimiques possibles.

Cet agent peut également être un hydrocarbure, de l'hydrogène, du monoxyde de carbone, ...

Comme cela est plus particulièrement décrit dans le document EP 0 758 714, une telle installation comprend la ligne d'échappement du moteur à combustion interne sur laquelle sont placés un catalyseur d'oxydation trois voies, des moyens pour injecter un agent réducteur, et un catalyseur à réduction catalytique sélective.

Le problème posé avec un telle installation réside dans le fait que le catalyseur trois voies ne fonctionne que lorsqu'il a atteint sa température de démarrage (ou température de "light off") qui est voisine de 200°C avec une richesse du mélange carburé du moteur qui est stoechiométrique, et le catalyseur RCS est opérationnel avec un mélange carburé pauvre du moteur avec une température de fonctionnement comprise entre 180°C et 550°C.

C'est pour cette raison qu'il est prévu, comme illustré dans le document précité, deux voies de circulation des gaz d'échappement, une voie comportant le catalyseur trois voies et le catalyseur RCS et une autre voie de circulation aboutissant directement à l'entrée du catalyseur trois voies.

Dans le document EP 1 602 403, le catalyseur RCS comprend deux corps actifs à la suite l'un de l'autre avec un passage de circulation de gaz prévu dans le corps amont.

Ces installations, outre le fait qu'elles sont d'une élaboration compliquée et volumineuse avec deux voies de circulation ou un passage supplémentaire de circulation des gaz, nécessitent des moyens de vannage associés à des stratégies de pilotage pour commander la circulation des gaz d'échappement dans l'une ou l'autre voie (ou passage).

De plus, lorsque le catalyseur RCS est parcouru par des gaz d'échappement, ces gaz très chauds lui occasionnent un choc thermique. Un tel choc thermique peut l'endommager et notamment lorsque ce choc est répétitif et plus particulièrement quand le catalyseur RCS est à température ambiante.

La présente invention se propose de remédier aux inconvénients ci-dessus mentionnés grâce à une installation de traitement des gaz d'échappement qui est d'une conception simple et d'un coût réduit.

A cet effet, la présente invention concerne un procédé de traitement des polluants contenus dans les gaz d'échappement d'un moteur à combustion interne comprenant une ligne d'échappement avec un catalyseur d'oxydation suivi d'un catalyseur à réduction catalytique sélective comprenant un corps poreux actif chimiquement avec un passage inerte chimiquement pour les gaz d'échappement le traversant ainsi que des moyens d'obturation contrôlant l'accès de ce passage auxdits gaz, et des moyens d'injection d'un agent réducteur dans ladite ligne en amont dudit catalyseur à réduction catalytique sélective, caractérisé en ce qu'il consiste, pour une température élevée des gaz d'échappement, à autoriser la circulation des gaz d'échappement dans ledit passage pour un fonctionnement stoechiométrique ou riche du moteur, et, pour un fonctionnement pauvre du moteur, à injecter l'agent réducteur dans la ligne d'échappement et à empêcher la circulation des gaz d'échappement dans ledit passage.

Le procédé peut aussi consister à empêcher la circulation des gaz d'échappement dans ledit passage pour un fonctionnement riche du moteur et une température basse des gaz d'échappement.

Le procédé peut consister à placer le passage dans la région centrale du corps du catalyseur à réduction catalytique sélective.

Ainsi, grâce à l'invention et cela quelque soit la configuration choisie, il est toujours possible de maintenir un flux de gaz chauds au travers du catalyseur RCS de manière à le maintenir en température.

De plus, le catalyseur trois voies, qui est situé en amont du catalyseur RCS, permet de réaliser une oxydation des NO en NO2 tout en permettant d'augmenter l'efficacité de ce catalyseur RCS.

En outre, lors des phases de fonctionnement du moteur à température élevée des gaz, tout ou partie de ces gaz peut être court-circuité du catalyseur RCS afin de maintenir ce catalyseur à une température inférieure à sa température limite.

De même et cela lors des phases de ralenti ou de faibles charges du moteur, la possibilité de contrôler la traversée du flux de gaz d'échappement au travers du catalyseur RCS permet de limiteur la vitesse de refroidissement de ce catalyseur.

Les autres caractéristiques et avantages de l'invention vont maintenant apparaître à la lecture de la description donnée ci-après à titre illustratif et nullement limitatif, en se référant aux dessins annexés sur lesquels :
- la figure 1 montre schématiquement une installation de traitement des gaz d'échappement selon l'invention dans une première configuration de fonctionnement ;
- la figure 2 montre l'installation de la figure 1 dans une deuxième configuration de fonctionnement et
- la figure 3 montre cette installation dans une autre configuration de fonctionnement.

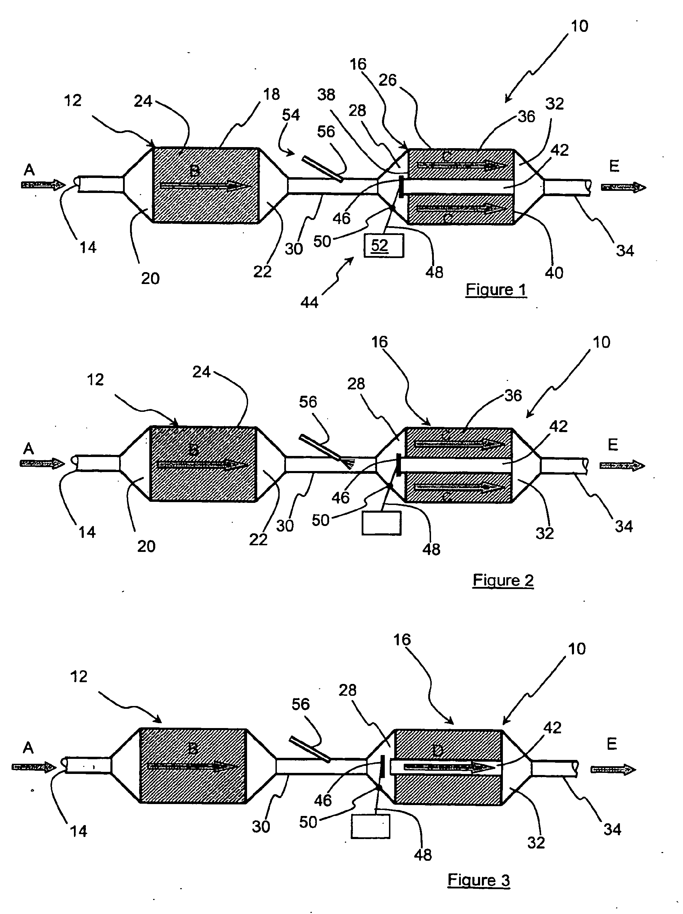

Sur la figure 1, l'installation de traitement comprend une ligne d'échappement 10 permettant d'évacuer les gaz d'échappement (flèche A) provenant de la combustion d'un mélange carburé et contenu dans un collecteur d'échappement (non représenté).

Cette ligne comporte un catalyseur d'oxydation trois voies 12, placé au plus près de l'entrée 14 de gaz d'échappement, suivi d'un catalyseur RCS 16.

Comme cela est connu, le catalyseur trois voies 12 comprend un boîtier 18, de préférence tubulaire, avec une entrée 20 des gaz d'échappement et une sortie 22 de ces gaz. Ce boîtier loge, entre son entrée et sa sortie, un

En outre, lors des phases de fonctionnement du moteur à température élevée des gaz, tout ou partie de ces gaz peut être court-circuité du catalyseur RCS afin de maintenir ce catalyseur à une température inférieure à sa température limite.

De même et cela lors des phases de ralenti ou de faibles charges du moteur, la possibilité de contrôler la traversée du flux de gaz d'échappement au travers du catalyseur RCS permet de limiter la vitesse de refroidissement de ce catalyseur.

Les autres caractéristiques et avantages de l'invention vont maintenant apparaître à la lecture de la description donnée ci-après à titre illustratif et nullement limitatif, en se référant aux dessins annexés sur lesquels :
- la figure 1 montre schématiquement une installation de traitement des gaz d'échappement selon l'invention dans une première configuration de fonctionnement ;
- la figure 2 montre l'installation de la figure 1 dans une deuxième configuration de fonctionnement et
- la figure 3 montre cette installation dans une autre configuration de fonctionnement.

Sur la figure 1, l'installation de traitement comprend une ligne d'échappement 10 permettant d'évacuer les gaz d'échappement (flèche A) provenant de la combustion d'un mélange carburé et contenu dans un collecteur d'échappement (non représenté).

Cette ligne comporte un catalyseur d'oxydation trois voies 12, placé au plus près de l'entrée 14 de gaz d'échappement, suivi d'un catalyseur RCS 16.

Comme cela est connu, le catalyseur trois voies 12 comprend un boîtier 18, de préférence tubulaire, avec une entrée 20 des gaz d'échappement et une sortie 22 de ces gaz. Ce boîtier loge, entre son entrée et sa sortie, un élément catalytique poreux 24 traversé par les gaz d'échappement (flèche B) en permettant ainsi de les dépolluer. Pour cela, cet élément comprend un substrat (ou support), généralement en cordiérite ou métallique, dans lequel sont déposées des phases catalytiques à base de métaux précieux, comme du palladium, de la platine et/ou du rhodium.

Ce catalyseur trois voies a pour rôle d'oxyder les HC et le CO et de réduire les NOx lors des fonctionnements du moteur avec un mélange carburé stoechiométrique.

Le catalyseur RCS comprend également une enveloppe tubulaire 26 avec une boîte d'entrée 28 des gaz provenant de la sortie du catalyseur trois voies et circulant dans une portion de conduit d'échappement 30 reliant la sortie du catalyseur trois voies à la boîte d'entrée. Cette enveloppe comprend aussi une boîte de sortie de gaz 32 connectée à une autre portion de conduit d'échappement 34 pour l'évacuation des gaz d'échappement dépollués dans l'atmosphère (Flèche E).

L'enveloppe contient un corps poreux 36, de préférence monolithique, actif chimiquement pour les gaz d'échappement placé entre sa boîte d'entrée et de sortie. Cette enveloppe comprend un support dans lequel un ou plusieurs réactifs catalytiques, tel que du vanadium dans le cas de l'utilisation de l'urée, sont implantés pour agir sur les NOx et plus particulièrement sur les N02.

Ce corps comprend une face d'entrée 38 communicant avec la boîte d'entrée de l'enveloppe et une face de sortie 40 placée dans la boîte de sortie de l'enveloppe. Ce corps porte au moins un passage, ici un canal 42, sensiblement rectiligne, s'étendant de la face d'entrée à la face de sortie. Avantageusement, ce canal est placé dans la région centrale du corps de catalyseur RCS et est dépourvu de tous réactifs catalytiques sur sa surface périphérique interne de façon à le rendre inerte chimiquement lors de la traversée des gaz.

Avantageusement, ce canal comporte sur sa périphérie interne un revêtement isolant thermiquement de façon à limiter le transfert de chaleur entre les gaz d'échappement et le corps poreux.

Comme mieux visible sur la figure, des moyens d'obturation 44 de ce canal sont prévus pour autoriser ou interdire l'accès et la circulation des gaz d'échappement dans ce canal.

Avantageusement, ces moyens sont placés sur l'embouchure de ce canal, c'est-à-dire sur l'extrémité du canal située sur la face d'entrée mais ils peuvent alternativement être placés sur le débouché du canal, c'est-à-dire sur l'extrémité du canal arrivant sur la face de sortie du corps.

A titre d'exemple, ces moyens d'obturation comprennent un clapet mobile 46 situé en regard de l'embouchure du canal et porté à articulation par une extrémité d'une biellette 48 articulée autour d'un axe rotation 50, située préférentiellement sur la paroi périphérique de la boîte d'entrée 28. L'autre extrémité de cette biellette est soumise à un moyen de commande 52 permettant de contrôler le basculement de cette bielle autour de cet axe 50. Ce moyen de commande, qui peut être un vérin (hydraulique, électrohydraulique, ...), un moteur électrique ou tout autre actionneur, est contrôlé par le calculateur-moteur en fonction des paramètres de fonctionnement du moteur, comme la richesse du mélange carburé et/ou la température des gaz d'échappement.

La ligne d'échappement comporte également des moyens d'injection 54 d'un agent réducteur pour le catalyseur RCS, ici de l'urée.

Ces moyens d'injection comprennent un injecteur d'urée 56 relié à un circuit d'injection (pompe, réservoir, ...) et placé sur la portion de conduit d'échappement 30 en amont de ce catalyseur (en considérant les sens de circulation des gaz d'échappement comme illustré par la flèche A). Cet injecteur est placé sur le conduit d'une façon telle que son nez débouche dans le conduit 30 pour pulvériser l'agent réducteur en direction de la boîte d'entrée 28 du catalyseur RCS.

Ainsi, dans le cadre d'un premier mode de fonctionnement de l'installation comme illustré à la figure 1, le clapet 46 est en position de fermeture du canal de circulation 42 sous l'action de la biellette 48 et du moyen de commande 52.

Il est considéré ici que la température des gaz d'échappement qui arrive à l'entrée 14 de la ligne d'échappement est inférieure à un seuil permettant de rendre opérationnel le catalyseur RCS mais suffisante pour atteindre la température de démarrage du catalyseur trois voies.

Dans cette configuration, les gaz d'échappement traversent le catalyseur trois voies (flèche B) entre son entrée 20 et sa sortie 22. Les polluants (HC, CO) contenus dans ces gaz sont alors traités lors de leur traversée de ce catalyseur. Ainsi, ces polluants sont transformés essentiellement en CO2 (dioxyde de carbone) et en H2O (eau).

Ces gaz traversent ensuite la portion de conduit 30 où l'injecteur d'urée est inactif pour aboutir dans la boîte d'entrée 28 du catalyseur RCS.

Comme l'embouchure du canal 42 est fermée par le clapet 46, ces gaz traversent le corps actif 36 (flèche C) tout autour de ce canal et aboutissent dans la boîte de sortie 32 en communication avec l'autre portion de conduit d'échappement 34 où ils sont évacués dans l'atmosphère (Flèche E).

Durant la traversée du catalyseur RCS et compte tenu de la relativement basse température de ces gaz, les polluants contenus dans les gaz ne sont pas traités chimiquement par le catalyseur RCS. Cependant, la traversée de ces gaz dans le corps 36 permet de transmettre la chaleur qu'ils véhiculent à ce corps pour augmenter sa température jusqu'au niveau de la température de ces gaz.

Ceci a pour avantage d'augmenter progressivement la température du corps 36 jusqu'à la température d'efficacité maximale du catalyseur RCS sans y générer des chocs thermiques.

Dans la configuration de fonctionnement de la figure 2, les gaz d'échappement parviennent à l'entrée 14 de la ligne d'échappement avec une température pouvant être comprise entre 200°C et 700°C. Cette température est suffisante pour rendre opérationnel à la fois le catalyseur trois voies et le catalyseur SCR mais est inférieure à un seuil critique susceptible de détruire le catalyseur SCR (environ 650° C).

Dans ce cas, l'injecteur d'agent réducteur 56 est actif et permet d'injecter l'urée dans la portion de conduit 30. Cette urée, sous l'effet de la chaleur des gaz d'échappement, se décompose en un élément ammoniaqué nécessaire à la catalyse RCS.

Cette configuration est généralement utilisée lorsque le moteur fonctionne avec un mélange carburé pauvre et lorsque les gaz d'échappement constituent un mélange oxydant.

Dans cet arrangement, les gaz d'échappement traversent, comme précédemment décrit, le catalyseur trois voies (flèche B) entre son entrée 20 et sa sortie 22 avec le traitement des polluants (HC, CO et NOx) contenus dans ces gaz avec une transformation en CO2, H2O et NO2.

Au contact des gaz d'échappement chauds circulant dans la portion de conduit d'échappement 30, l'urée se décompose essentiellement en ammoniac (NH3) qui est admis avec les gaz dans la boîte d'entrée 28 du catalyseur RCS.

Comme pour l'exemple de la figure 1, le clapet 46 obture l'embouchure du canal 42 et le mélange de gaz d'échappement et d'ammoniac traverse le corps poreux 36 autour du canal 42. Durant cette traversée, les NO2 contenus dans les gaz d'échappement réagissent chimiquement avec les phases catalytiques du catalyseur et sont transformés principalement en azote (N2).

Ces gaz dépollués parviennent ensuite à la boîte de sortie 32 du catalyseur RCS d'où ils sont évacués dans l'atmosphère par l'autre portion de conduit 34.

Dans l'illustration de la figure 3, la température des gaz d'échappement qui parviennent à l'entrée 14 de la ligne d'échappement est à un niveau de température tel qu'ils risquent d'endommager, voire de détruire, le catalyseur RCS. De plus, compte tenu de cette température élevée, ce catalyseur RCS ne peut pas réduire les polluants (N02) qui le traversent.

Le clapet 46 est alors commandé en déplacement par rotation de la biellette 48 autour de l'axe 50 en dégageant ainsi l'embouchure du canal 42 et l'injecteur d'urée 56 est rendu inactif.

Les gaz d'échappement qui ont traversé le catalyseur trois voies aboutissent dans la portion de conduit d'échappement 30 puis dans la boîte d'entrée 28 du catalyseur RCS.

Ces gaz traversent ensuite le corps 36 en utilisant la voie la plus facile pour eux et plus précisément en utilisant la voie libre de toute entrave du canal 42 (Flèche D) qui a été dimensionné en conséquence. Comme ce canal est dépourvu de tous réactifs catalytiques en étant un canal inerte chimiquement, les gaz d'échappement ne sont pas traités et arrivent dans la boîte de sortie 32 pour être ensuite dirigés vers l'autre portion de conduit d'échappement 34.

Grâce à cela, les gaz très chauds ne peuvent pas endommager le corps du catalyseur RCS mais communiquent cependant de la chaleur à ce corps pour le maintenir en température jusqu'à sa prochaine utilisation.

Il est clair que la température des gaz peut être, soit évaluée par le calculateur-moteur à partir de différents paramètres de fonctionnement du moteur (débit de carburant, pression admission, ...), soit mesurée directement par tous moyens comme un capteur de température placé de préférence en amont du catalyseur RCS.

A titre de résumé, le tableau ci-dessous répertorie les différentes positions du clapet 42 ainsi que le mise en action du catalyseur RCS en fonction de la charge du moteur, de la richesse de fonctionnement de ce moteur et de la température des gaz d'échappement.

| **Point moteur** | **Temp. gaz d'échappement** | **Richesse moteur** | **Clapet** | **Injection agent réducteur** |
|---|---|---|---|---|
| Faible charge | Froid | 1 | fermé | non |
| Charge moyenne | Froid | 1 | fermé | non |
| Forte charge | Froid | 1 | fermé | non |
| Faible charge | Chaud | 1 | ouvert | non |
| Charge moyenne | Chaud | pauvre | fermé | oui |
| Forte charge | chaud | >=1 | ouvert | non |

A la lecture de tableau, il peut être noté que, pour une richesse de fonctionnement à la stoechiométrie ou riche du moteur et quelque soit la charge moteur associé à une température basse des gaz d'échappement, c'est-à-dire insuffisante pour activer le catalyseur RCS, le clapet 46 est donc en position de fermeture de canal 42 et l'injecteur d'urée 56 est inactif.

Les gaz d'échappement traversent le corps du catalyseur RCS sans être dépollués mais sont utilisés pour aider à la montée en température de ce catalyseur ou pour maintenir la température de ce corps.

Par contre, lorsque les gaz sont chauds (et cela quelque soit le niveau de température de ces gaz) et que le moteur fonctionne avec une richesse égale ou supérieure à 1 avec une faible ou une forte charge, l'injecteur d'urée est toujours inactif et le clapet est en position d'ouverture du canal 46.

Les gaz d'échappement ne circulent alors que dans le canal 42 en communicant par conduction thermique leur chaleur au corps du catalyseur de façon à le maintenir en température.

Si la température des gaz d'échappement sortant du catalyseur trois voies est suffisante pour activer le catalyseur RCS et réaliser la dépollution des gaz d'échappement, le moteur est alors en mode de fonctionnent pauvre sous une charge moyenne. Le clapet est alors commandé de façon à obturer l'embouchure du canal 42 et de l'urée est injecté dans la portion de canal 30.

De ce fait, les polluants contenus dans les gaz d'échappement lors de la traversée de ceux-ci du corps sont transformés en produit inoffensif après leur traitement par le catalyseur RCS.

La présente invention n'est pas limité aux exemples décrits ci-dessus mais englobe toutes variantes et tous équivalents.

Notamment, l'installation décrite peut être utilisée pour des moteurs à combustion interne de type Diesel avec des phases de fonctionnement à la stoechiométrie.

## Revendications

1. Procédé de traitement des polluants contenus dans les gaz d'échappement d'un moteur à combustion interne comprenant une ligne d'échappement (10) avec un catalyseur d'oxydation (12) suivi d'un catalyseur à réduction catalytique sélective (16) comprenant un corps poreux actif chimiquement avec un passage inerte chimiquement (42) pour les gaz d'échappement le traversant ainsi que des moyens d'obturation (44) contrôlant l'accès de ce passage auxdits gaz, et des moyens d'injection (54) d'un agent réducteur dans ladite ligne en amont dudit catalyseur à réduction catalytique sélective, **caractérisé en ce qu'**il consiste, pour une température élevée des gaz d'échappement, à autoriser la circulation des gaz d'échappement dans ledit passage pour un fonctionnement stoechiométrique ou riche du moteur, et, pour un fonctionnement pauvre du moteur, à injecter l'agent réducteur dans la ligne d'échappement et à empêcher la circulation des gaz d'échappement dans ledit passage.

2. Procédé de traitement des polluants contenus dans les gaz d'échappement selon la revendication 1, **caractérisée en ce qu'**il consiste à empêcher la circulation des gaz d'échappement dans ledit passage pour un fonctionnement riche du moteur et une température basse des gaz d'échappement.

3. Procédé de traitement des polluants contenus dans les gaz d'échappement selon la revendication 1 ou 2, **caractérisée en ce qu'**il consiste à placer le passage (42) dans la région centrale du corps (36) du catalyseur à réduction catalytique sélective (16).

## Claims

1. A plant for treating the pollutants contained in the exhaust gases of an internal-combustion engine comprising an exhaust line (10) with an oxidation catalyst (12), a selective catalytic reduction catalyst (16) including a chemically active porous body and injection means (54) for injecting a reducing agent into said line, **characterized in that** selective catalytic reduction catalyst (16) comprises at least one chemically inert passage (42) for the exhaust gases flowing therethrough and **in that** shut-off means (44) control access of said gases to this passage.

2. A plant for treating the pollutants contained in exhaust gases as claimed in claim 1, **characterized in that** the passage consists of a channel (42) located in the central area of body (36) of selective catalytic reduction catalyst (16).

3. A plant for treating the pollutants contained in exhaust gases as claimed in any one of the previous claims, **characterized in that** the shut-off means are located upstream from selective catalytic reduction catalyst (16), considering the direction of circulation of the exhaust gases.

4. A plant for treating the pollutants contained in exhaust gases as claimed in any one of the previous claims, **characterized in that** the shut-off means comprise a clapper (46) mobile under the action of a control means (52).

5. A plant for treating the pollutants contained in exhaust gases as claimed in claim 4, **characterized in that** control means (52) comprise an actuator, a jack or an electric motor.

6. A plant for treating the pollutants contained in exhaust gases as claimed in claim 1, **characterized in that** the exhaust line successively comprises an exhaust gas inlet (14), oxidation catalyst (12), reducing agent injection means (54), passage shut-off means (44) and selective catalytic reduction catalyst (16).

7. A method of treating the pollutants contained in the exhaust gases of an internal-combustion engine comprising an exhaust line (10) with an oxidation catalyst (12), a selective catalytic reduction catalyst (16) and injection means (54) for injecting a reducing agent into said line, **characterized in that** it consists in controlling the circulation of the exhaust gases through a chemically inert passage (42) in the selective catalytic reduction catalyst (16).

8. A method of treating the pollutants contained in exhaust gases as claimed in claim 7, **characterized in that** it consists in allowing circulation of the exhaust gases in said passage under stoichiometric or rich engine operating conditions and a high exhaust gas temperature.

9. A method of treating the pollutants contained in exhaust gases as claimed in claim 7, **characterized in that** it consists in preventing circulation of the exhaust gases in said passage under rich engine operating conditions and a low exhaust gas temperature.

10. A method of treating the pollutants contained in exhaust gases as claimed in claim 7, **characterized in that** it consists in preventing circulation of the exhaust gases in said passage under lean engine operating conditions and a high exhaust gas temperature.

## Patentansprüche

1. Anlage zur Behandlung der in den Abgasen einer Brennkraftmaschine enthaltenen Schadstoffe, welche eine Abgasleitung (10) mit einem Oxidationskatalysator (12), einem Katalysator für selektive katalytische Reduktion (16), der einen chemisch aktiven porösen Körper umfasst, und Mittel zur Einspritzung (54) eines Reduktionsmittels in die Leitung umfasst, **dadurch gekennzeichnet, dass** der Katalysator für selektive katalytische Reduktion (16) mindestens einen chemisch inerten Durchlass (42) für die ihn durchquerenden Abgase umfasst, und dadurch, dass Verschlussmittel (44) den Zugang dieses Durchlasses für die Gase steuern.

2. Anlage zur Behandlung der in den Abgasen enthaltenen Schadstoffe nach Anspruch 1, **dadurch gekennzeichnet, dass** der Durchlass aus einem Kanal (42) besteht, der sich im zentralen Bereich des Körpers (36) des Katalysators für selektive katalytische Reduktion (16) befindet.

3. Anlage zur Behandlung der in den Abgasen enthaltenen Schadstoffe nach einem der vorhergehenden Ansprüche, **dadurch gekennzeichnet, dass** sich die Verschlussmittel, in der Strömungsrichtung der Abgase gesehen, stromaufwärts des Katalysators für selektive katalytische Reduktion (16) befinden.

4. Anlage zur Behandlung der in den Abgasen enthaltenen Schadstoffe nach einem der vorhergehenden Ansprüche, **dadurch gekennzeichnet, dass** die Verschlussmittel eine unter Einwirkung eines Steuerungsmittels (52) bewegliche Klappe (46) aufweisen.

5. Anlage zur Behandlung der in den Abgasen enthaltenen Schadstoffe nach Anspruch 4, **dadurch gekennzeichnet, dass** das Steuerungsmittel (52) einen Aktor, einen Zylinder oder einen Elektromotor aufweist.

6. Anlage zur Behandlung der in den Abgasen enthaltenen Schadstoffe nach Anspruch 1, **dadurch gekennzeichnet, dass** die Abgasleitung nacheinander einen Abgaseinlass (14), den Oxidationskatalysator (12), die Mittel zur Einspritzung (54) des Reduktionsmittels, die Verschlussmittel (44) des Durchlasses und den Katalysator für selektive katalytische Reduktion (16) aufweist.

7. Verfahren zur Behandlung der in den Abgasen einer Brennkraftmaschine enthaltenen Schadstoffe, welche eine Abgasleitung (10) mit einem oxidationskatalysator (12), einem Katalysator für selektive katalytische Reduktion (16) und Mittel zur Einspritzung (54) eines Reduktionsmittels in die Leitung umfasst, **dadurch gekennzeichnet, dass** es darin besteht, die Strömung der Abgase durch einen chemisch inerten Durchlass (42) in dem Katalysator für selektive katalytische Reduktion (16) hindurch zu steuern.

8. Verfahren zur Behandlung der in den Abgasen enthaltenen Schadstoffe nach Anspruch 7, **dadurch gekennzeichnet, dass** es darin besteht, die Strömung der Abgase in dem Durchlass für einen stöchiometrischen oder fetten Betrieb des Motors und eine hohe Temperatur der Abgase zuzulassen,

9. Verfahren zur Behandlung der in den Abgasen enthaltenen Schadstoffe nach Anspruch 7, **dadurch gekennzeichnet, dass** es darin besteht, die Strömung der Abgase in dem Durchlass für einen fetten Betrieb des Motors und eine niedrige Temperatur der Abgase zu verhindern.

10. Verfahren zur Behandlung der in den Abgasen enthaltenen Schadstoffe nach Anspruch 7, **dadurch gekennzeichnet, dass** es darin besteht, die Strömung der Abgasen in dem Durchlass für einen mageren Betrieb des Motors und eine hohe Temperatur der Abgase zu verhindern.
